# EUROPÄISCHE PATENTSCHRIFT

(11) **EP 4 010 638 B1**
(45) Veröffentlichungstag und Bekanntmachung des Hinweises auf die Patenterteilung: **29.10.2025**
(21) Anmeldenummer: 20753703.6
(22) Anmeldetag: 03.08.2020
(51) Int. Cl.: F24F 5/00

(54) **VERSORGUNGSKREIS FÜR EIN WÄRMETRÄGERMEDIUM FÜR EINEN VERBRAUCHER, INDUSTRIEANLAGE UND VERFAHREN ZUM BETREIBEN VON SOLCHEN**
HEAT TRANSFER MEDIUM SUPPLY CIRCUIT FOR A FOR A CONSUMER, INDUSTRIAL FACILITY AND METHOD TO OPERATE THEM
CIRCUIT D'ALIMENTATION D'UN AGENT CALOPORTEUR VERS UN CONSOMMATEUR, INSTALLATION INDUSTRIELLE ET PROCÉDÉ DE FONCTIONNEMENT CORRESPONDANT

(30) Priorität: 08.08.2019 DE 102019121412
(43) Veröffentlichungstag der Anmeldung: 15.06.2022
(73) Patentinhaber: Eisenmann GmbH, 71032 Böblingen (DE)
(72) Erfinder: RAUSER, Wolfgang, 72224 Ebhausen (DE)
(74) Vertreter: Ostertag & Partner Patentanwälte mbB
(86) Internationale Anmeldenummer: PCT/EP2020/071814
(87) Internationale Veröffentlichungsnummer: WO 2021/023714

(56) Entgegenhaltungen:
- EP-A1- 3 431 889
- EP-A2- 2 913 614
- CN-A- 104 515 220
- CN-A- 106 642 460
- US-A- 2 793 004

## Beschreibung

Die Erfindung betrifft eine Industrieanlage mit
a) einem Primär-Versorgungskreis, in welchem Kühlwasser geführt wird;
b) einem Verbraucher, dem Kühlwasser aus dem Primär-Versorgungskreis zur Verfügung gestellt wird und der zu diesem Zweck über einen Sekundär-Versorgungskreis mit dem Primär-Versorgungskreis verbunden ist;
   wobei
c) eine Vorlaufleitung des Sekundär-Versorgungskreises mit einer Vorlaufleitung des Primär-Versorgungskreises und eine Rücklaufleitung des Sekundär-Versorgungskreises mit einer Rücklaufleitung des Primär-Versorgungskreises verbunden ist.

Außerdem betrifft die Erfindung ein Verfahren zum Betreiben eines Versorgungskreises oder einer Industrieanlage.

In Industrieanlagen gibt es in bekannter Art und Weise Verteilstränge für Kühlwasser, die einen Primär-Versorgungskreis für das Kühlwasser bilden, mittels welchem Wärmeenergie von oder an Verbrauchern mit Hilfe von dortigen Verbraucher-Wärmetauschern aufgenommen und abgeführt werden kann, wodurch an den Verbrauchern eine Kühlleistung erbracht werden kann.

Beispielsweise wird Kühlwasser in Behandlungsanlagen zum Behandeln von Gegenständen, insbesondere von Fahrzeugkarosserien, d.h. Karosserien von Personenkraftwagen und Lastkraftwagen, und/oder von Teilen oder Anbauteilen von Karosserien genutzt. Zu solchen Behandlungsanlagen zählen vor allem Lackieranlagen, in denen die Gegenstände mit einem Lack beschichtet werden. In solchen Lackieranlagen können mit dem Kühlwasser beispielsweise die Lacke oder Behandlungsflüssigkeiten gekühlt werden. Vor allem für Behandlungsflüssigkeiten, die im Zusammenhang mit einer Tauchbehandlung der Gegenstände verwendet werden, wird ein verhältnismäßig großer Aufwand zur Kühlung betrieben.

Nicht nur in Lackieranlagen, sondern bei vielen anderen Industrieanlagen wird Kühlwasser beispielsweise genutzt, um Luft im Zusammenhang mit einer Luftkonditionierung zu kühlen, die dann Arbeitsprozessen als Kühlluft zugeführt werden kann. Beispielsweise kann gekühlte Luft in Kühlzonen von Trockenanlagen geführt werden. Dabei sind wieder insbesondere Lackieranlagen von Interesse, welche Trockneranlagen umfassen, in denen die lackierten Gegenstände getrocknet werden. Eine Luftkonditionierung umfasst häufig eine Entfeuchtung der Luft, wozu die zu entfeuchtende Luft heruntergekühlt werden muss, damit das mitgeführte Wasser auskondensiert.

Das Kühlwasser muss eine Temperatur haben, die eine ausreichende Kühlleistung sicherstellt. Hierfür werden in Regel Kältemaschinen genutzt, wie sie an und für sich bekannt sind. Der Energieaufwand kann dabei recht hoch sein.

EP 3 431 889 A offenbart eine Industrieanlage nach dem Oberbegriff des Anspruchs 1. CN 104 515 220 A offenbart eine zentrale Klimaanlage, die eine Luft- und eine Wasserkühlung kombiniert. CN 106 642 460 A verwendet Kühlwasser für ein Frischluft-Vorkühlsystem aus einem Brunnen zur Speisung eines Kühlwasserbehälters, in welchem ein Wärmetauscher angeordnet ist, der seinerseits den Kühlkreislauf eines Kühlaggregats speist. Bei der US 2 793 004 A wird Kühlwasser aus Grundwasser nach oben durch einen Wärmetauscher gepumpt und im Kreislauf wieder dem Grundwasser zugeführt.

Es ist Aufgabe der Erfindung, eine Industrieanlage und ein Verfahren der eingangs genannten Art bereitzustellen, die es ermöglichen, Kühlwasser ressourcenschonend und energieeffizient bereitzustellen und zu nutzen.

Diese Aufgabe wird bei einer Industrieanlage der eingangs genannten Art dadurch gelöst, dass
d) die Vorlaufleitung des Primär-Versorgungskreises mit einer Grundwasser-Förderleitung einer Brunnenanlage verbunden ist, die eine Grundwasser-Fördereinrichtung umfasst und mittels welcher Grundwasser aus einem Grundwasserleiter förderbar ist und mittels welcher dieses Grundwasser als das Kühlwasser in die Vorlaufleitung des Primär-Versorgungskreises einspeisbar ist.

Erfindungsgemäß wurde erkannt, dass natürlich vorkommendes Grundwasser für Industrieanlagen ein großes Potential für Kühlzwecke aufweist. Je nach der Tiefe, in der sich Grundwasser im Boden befindet, hat Grundwasser eine Ausgangstemperatur von beispielsweise 14°C bis 16°C, was für viele Anwendungen bereits eine zum Kühlen ausreichend niedrige Temperatur ist. Ein energieaufwendiges Kühlen des Kühlwassers als solches kann gegebenenfalls vollständig entfallen.

Es ist günstig, wenn die Rücklaufleitung des Primär-Versorgungskreises mit einer Ablaufleitung verbunden ist, die Kühlwasser als Rücklaufwasser an einen Schluckbrunnen der Brunnenanlage oder in anderer Weise an die Umwelt abgibt. Durch einen Schluckbrunnen wird das Kühlwasser dem Grundwasser wieder zugeführt, weshalb das System besonders ressourcenschonend ist. Da ein geschlossener Kreislauf möglich ist, besteht auch keine Gefahr einer Kontamination des Kühlwassers mit Verunreinigungen, die eine Rückführung des Kühlwassers in den natürlichen Kreislauf verbieten würde. Alternativ zu einem Schluckbrunnen kann das Rücklaufwasser beispielsweise agrarwirtschaftlich genutzt werden und zum Beispiel als Bewässerungswasser auf Feldern, sonstigen Anbauflächen oder auch in Gewächshäusern eingesetzt werden.

Es kann von Vorteil sein, wenn der Primär-Versorgungskreis mit einem Nachkühlsystem verbunden ist, mittels welchem Kühlwasser in der Vorlaufleitung des Primär-Versorgungskreises gekühlt werden kann. Mit einem solchen Nachkühlsystem kann das Grundwasser auf eine Temperatur abgekühlt werden, wenn die Ausgangstemperatur des Grundwassers für die benötigte Kühlleistung an dem oder den Verbrauchern nicht ausreicht. Da das Grundwasser jedoch bereits eine verhältnismäßig niedrige Ausgangstemperatur hat, ist der Energieaufwand hierfür noch geringer als für die Abkühlung von Wasser, dass zunächst Raumtemperatur hat.

Es ist günstig, wenn das Nachkühlsystem einen Nachkühl-Wärmetauscher umfasst, durch den eine Vorlauf-Bypassleitung der Vorlaufleitung des Primär-Versorgungskreises führt und dem ein gesondertes Kühlmedium, insbesondere Wasser, Glykol oder ein Gemisch aus Wasser und Glykol, zuführbar ist, wobei die Vorlauf-Bypassleitung mittels eines Vorlauf-Bypassventils geöffnet oder verschlossen werden kann. Das Nachkühlsystem kann nach Bedarf aktiviert oder deaktiviert werden.

Das Nachkühlsystem arbeitet effektiv, wenn es eine oder mehrere Kältemaschinen umfasst, mittels welchen das gesonderte Kühlmedium gekühlt wird.

Es ist besonders effizient, wenn eine Rücklauf-Bypassleitung des Primär-Versorgungskreises von dessen Rücklaufleitung zu der Kältemaschine und wieder zurück zu der Rücklaufleitung führt, wobei die Wärmeabgabeseite der Kältemaschine über eine Wärmetauscherschleife mit der Rücklauf-Bypassleitung verbunden ist. Auf diese Weise kann das bereits zur Kühlung der Verbraucher verwendete Kühlwasser außerdem noch zum Abführen der Abwärme, die an oder in einer jeweiligen Kältemaschine entsteht, genutzt werden.

Vorzugsweise ist zum Fördern des Kühlwassers durch den Sekundär-Versorgungskreis eine frequenzgeregelte Pumpeinrichtung mit einer Kühlwasser-Förderpumpe und einem der Kühlwasser-Förderpumpe zugeordneten Frequenzumrichter vorgesehen. Die Verwendung einer frequenzgeregelten Pumpeinrichtung eröffnet Betriebsweisen, bei denen der Energiebedarf für den Betrieb des Versorgungskreises mit dem Energiebedarf am Verbraucher korreliert werden kann. Insbesondere kann die Förderleistung der Förderpumpe variiert werden, wodurch der Volumenstrom des Kühlwassers durch den Verbraucher-Wärmetauscher an den dortigen Bedarf angepasst werden kann.

Bevorzugt sind die Vorlaufleitung und die Rücklaufleitung des Sekundär-Versorgungskreises durch eine Zirkulationsleitung miteinander verbunden, derart, dass Kühlwasser aus der Rücklaufleitung des Sekundär-Versorgungskreises im Kreislauf in die Vorlaufleitung des Sekundär-Versorgungskreises führbar ist, wobei die Zirkulationsleitung stromauf der Kühlwasser-Förderpumpe in die Vorlaufleitung des Sekundär-Versorgungskreises mündet und/oder ein Zirkulationsventil vorhanden ist, mittels welchem der Anteil des Kühlwassers, welches durch die Zirkulationsleitung in die Vorlaufleitung des Sekundär-Versorgungskreises strömt, einstellbar ist. Auf diese Weise kann das Wärmeträgermedium erneut genutzt werden, ohne dass es beispielsweise unmittelbar wieder in den oben angesprochenen Primär-Versorgungskreis zurückgeführt wird. Vorzugsweise mündet die Zirkulationsleitung stromauf der Kühlwasser-Förderpumpe in die Vorlaufleitung des Sekundär-Versorgungskreises. So wird das aus der Zirkulationsleitung in die Vorlaufleitung strömende Wärmeträgermedium effektiv von der Kühlwasser-Förderpumpe gefördert und zugleich eine gute Durchmischung des bereits in der Vorlaufleitung befindlichen Wärmeträgermediums mit dem Wärmeträgermedium aus der Zirkulationsleitung gewährleistet.

Vorzugsweise sind die Grundwasser-Fördereinrichtung und, sofern vorhanden, die frequenzgeregelte Pumpeinrichtung und/oder das Zirkulationsventil und oder das Vorlauf-Bypassventil und/oder die Kältemaschine mittels eines Steuersystems ansteuerbar.

Eine effektive Anpassung der Betriebsmodi der Industrieanlage bzw. der Versorgungskreise abhängig von dem Bedarf an dem oder den Verbrauchern kann besonders dann erfolgen, wenn das Steuersystem mit einem Sensorsystem verbunden ist, mittels welchem
a) der Eingangsdruck des Grundwassers auf der Einlassseite der Grundwasser-Fördereinrichtung und/oder der Ausgangsdruck des Grundwassers auf der Auslassseite der Grundwasser-Fördereinrichtung;
   und/oder
b) der Eingangsdruck des Kühlwassers auf der Einlassseite der Kühlwasser-Förderpumpe und/oder der Ausgangsdruck des Kühlwassers auf der Auslassseite der Kühlwasser-Förderpumpe;
   und/oder
c) die Temperatur des Kühlwassers in der Vorlaufleitung des Sekundär-Versorgungskreises auf der Einlassseite des Verbraucher-Wärmetauschers und/oder die Temperatur des Kühlwassers in der Rücklaufleitung des Sekundär-Versorgungskreises an der Auslassseite des Verbraucher-Wärmetauschers;
   und/oder
d) die Temperatur des Kühlwassers in der Vorlaufleitung des Primär-Versorgungskreises auf der Auslassseite der Rücklauf-Bypassleitung;
erfassbar ist und die zugehörigen Sensorantworten an das Steuersystem übertragbar sind. Die oben genannte Aufgabe wird bei einem Verfahren der eingangs genannten Art dadurch gelöst, dass als Kühlwasser natürlich vorkommendes Grundwasser genutzt wird, das mit Hilfe einer Brunnenanlage aus einem Grundwasserleiter gewonnen wird.

Die Vorteile sind dieselben wie die Vorteile, die oben im Zusammenhang mit der Industrieanlage erläutert wurden.

Entsprechend ist es günstig, wenn das Kühlwasser in der Vorlaufleitung des Primär-Versorgungskreises mit Hilfe eines Nachkühlsystems gekühlt wird, wenn die Temperatur des Kühlwassers eine vorgegebene Höchsttemperatur übersteigt.

Vorzugsweise wird mit dem Verfahren eine Industrieanlage mit einigen oder allen der oben zur Industrieanlage genannten Merkmale betrieben.

Nachfolgend werden Ausführungsbeispiele der Erfindung anhand der Zeichnungen näher erläutert. In diesen zeigen:
- Figur 1: ein schematisches Layout einer Industrieanlage gemäß einem ersten Ausführungsbeispiel;
- Figur 2: ein schematisches Layout einer Industrieanlage gemäß einem zweiten Ausführungsbeispiel;
- Figur 3: einen Ausschnitt einer abgewandelten Industrieanlage mit einem Wärmetauscher, die nicht Teil der Erfindung ist.

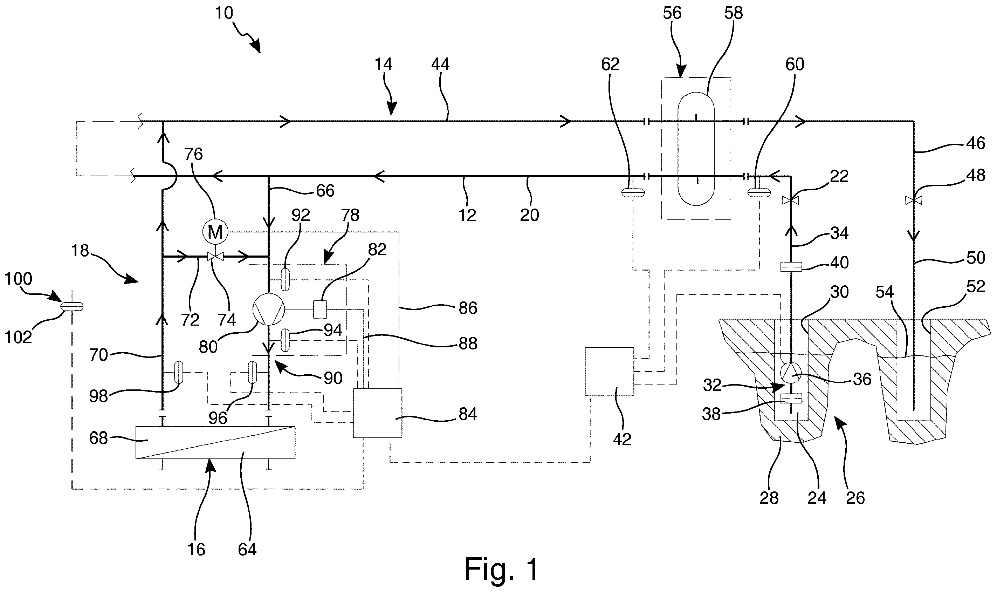

Zunächst wird auf Figur 1 Bezug genommen, in der 10 eine Industrieanlage bezeichnet, bei welcher ein Kühlmedium in Form von Kühlwasser 12 in einem Primär-Versorgungskreis 14 geführt wird. Unter Industrieanlagen sind insbesondere die oben erläuterten Industrieanlagen zu verstehen.

Aus dem Primär-Versorgungskreis 14 wird Kühlwasser 12 einem oder mehreren Verbrauchern 16 zur Verfügung gestellt, die zu diesem Zweck über einen jeweiligen Sekundär-Versorgungskreis 18 mit dem Primär-Versorgungskreis 14 verbunden sind, wobei der Übersichtlichkeit halber nur ein einziger Verbraucher 16 in einem Sekundär-Versorgungskreis 18 gezeigt ist. Die Strömungsrichtung des Kühlwassers 12 in dem Primär-Versorgungskreis 14 und dem Sekundär-Versorgungskreis 18 ist durch jeweilige, nicht eigens gekennzeichnete Pfeile veranschaulicht. Ein solcher Sekundär-Versorgungskreis 18 definiert allgemein einen Versorgungskreis für einen Verbraucher 16.

Nachfolgend werden die Begriffe "Primär-Versorgungskreis" und "Sekundär-Versorgungskreis" mit "PC" ("Primary Circuit") bzw. "SC" ("Secondary Circuit") abgekürzt, sofern sie bei der Bezeichnung von Bauteilen und Komponenten vorangestellt werden, um deren Zugehörigkeit zum Primär-Versorgungskreis 14 oder zum Sekundär-Versorgungskreis 18 zu verdeutlichen.

Der Primär-Versorgungskreis 14 umfasst eine PC-Vorlaufleitung 20, in welche kaltes Kühlwasser 12 an einem Zulauf 22 eingespeist wird. Als kaltes Kühlwasser 12 wird natürlich vorkommendes Grundwasser 24 genutzt, das mit Hilfe einer Brunnenanlage 26 aus einem Grundwasserleiter 28, d.h. aus grundwasserführendem Gestein und/oder Sediment oder dergleichen, gewonnen wird.

Die Brunnenanlage 26 umfasst hierzu einen Brunnenschacht 30, in dem das Grundwasser 24 angesammelt ist und in dem eine Grundwasser-Fördereinrichtung 32 angeordnet ist. Die Grundwasser-Fördereinrichtung 32 umfasst eine Grundwasser-Förderleitung 34, die mit dem Zulauf 22 der PC-Vorlaufleitung 20 verbunden ist und in der eine Grundwasser-Förderpumpe 36 angeordnet ist.

Wenn hier und nachfolgend von einer Verbindung von zwei Leitungen die Rede ist, ist darunter auch zu verstehen, dass zwei gemäß ihrer Funktion bezeichnete Leitungen ohne gesondertes Bauteil ineinander übergehen.

Stromauf der Grundwasser-Förderpumpe 36 misst ein Einlass-Drucksensor 38 den Eingangsdruck des Grundwassers 24 auf der Einlassseite der Grundwasser-Fördereinrichtung 32, d.h. der Grundwasser-Förderpumpe 36. Ein Auslass-Drucksensor 40 misst den Ausgangsdruck des Grundwassers 24 auf der Auslassseite der Grundwasser-Fördereinrichtung 32, d.h. Grundwasser-Förderpumpe 36. Auf diese Weise ist die Möglichkeit für eine Differenzdruckmessung in die Grundwasser-Fördereinrichtung 32 integriert.

Die Drucksensoren 38 und 40 geben ihre Signale an eine Vorlaufsteuereinrichtung 42, welche die Drehzahl der Grundwasser-Förderpumpe 36 und damit die Fördermenge an Grundwasser 24 einstellt.

Das Grundwasser 24 wird in einer Fördertiefe von 4m bis 12m, insbesondere in einer Fördertiefe von 6m bis 10m oder von 7m bis 9m gewonnen. Als Bezugsgröße kann gelten, dass Grundwasser 24 aus etwa 9m bis 10m eine Temperatur von 14°C bis 16°C hat.

Die PC-Vorlaufleitung 20 geht in Strömungsrichtung hinter dem oder den Verbrauchern 16 in eine PC-Rücklaufleitung 44 über, aus welcher im Vergleich zu dem Grundwasser 24 warmes Kühlwasser 12 in Form von Rücklaufwasser 46 an einem Ablauf 48 austritt. Die Bezeichnungen "warm" und "kalt" zeigen lediglich die relativen Temperaturen der Medien im Vergleich auf; warmes Kühlwasser 12 ist wärmer als kaltes Kühlwasser 12, d.h. das Rücklaufwasser 46 ist wärmer als aus dem Brunnenschacht 30 gefördertes Grundwasser 24. Das Rücklaufwasser 12 hat beispielsweise eine Temperatur zwischen 20°C und 22°C.

Wenn lediglich ein einziger Verbraucher 16 vorhanden ist, bildet der Sekundär-Versorgungskreis 18 in Strömungsrichtung die einzige Verbindungsleitung zwischen der PC-Vorlaufleitung 20 und der PC-Rücklaufleitung 44.

Der Ablauf 48 der PC-Rücklaufleitung 44 ist mit einer Ablaufleitung 50 verbunden, die das Rücklaufwasser 46 an einen Schluckbrunnen 52 abgibt, der von der Brunnenanlage 26 umfasst ist. Ein solcher Schluckbrunnen 52 wird auch als Sickerschacht bezeichnet und dient der Versickerung des Rücklaufwassers 46, so dass dieses wieder dem Grundwasserleiter 28 zugeführt wird.

Durch diesen Kreislauf des Grundwassers 24 erfolgt keine irreversible Entnahme von Grundwasser 24 und der mit 54 bezeichnete Grundwasserspiegel bleibt im Zusammenhang mit der Industrieanlage 10 weitgehend unverändert. Es erfolgt auch keine Veränderung der Zusammensetzung des Grundwassers 24; das aus dem Brunnenschacht 30 geförderte Grundwasser 24 unterscheidet sich von dem Rücklaufwasser 46 lediglich in der Temperatur.

Die PC-Vorlaufleitung 20 und die PC-Rücklaufleitung 44 sind in an und für sich bekannter Weise über eine Ausgleichseinrichtung 56 voneinander entkoppelt, um unterschiedlich hohe Umlaufströme in der PC-Vorlaufleitung 20 und der PC-Rücklaufleitung 44 auszugleichen. Hierfür ist eine hydraulische Weiche 58 vorgesehen. In Strömungsrichtung vor und hinter der Ausgleichseinrichtung 56 ist jeweils ein Temperatursensor 60 bzw. 62 vorgesehen, mit denen die Temperatur des Kühlwassers 12 in der PC-Vorlaufleitung 20 erfasst werden kann. Die Temperatursensoren 60 und 62 geben ihre Signale an die Vorlaufsteuereinrichtung 42.

Als Beispiel für einen Verbraucher 16 in dem Sekundär-Versorgungskreis 18 ist in Figur 1 ein Verbraucher-Wärmetauscher 64 gezeigt, der insbesondere als an und für sich bekannter Lamellenwärmetauscher oder Plattenwärmetauscher ausgebildet sein kann. Dieser Verbraucher-Wärmetauscher 64 kann seinerseits beispielsweise von einer Umluftanlage umfasst sein, um dort anfallende Luft, die konditioniert werden muss, zu temperieren.

Der Sekundär-Versorgungskreis 18 umfasst eine SC-Vorlaufleitung 66, die von der PC-Vorlaufleitung 20 zu dem Verbraucher-Wärmetauscher 64 führt. Dort geht die Sekundär-Vorlaufleitung 66 in eine SC-Wärmetauscherleitung 68 über, die durch den Verbraucher-Wärmetauscher 64 hindurch führt und hiernach in eine SC-Rücklaufleitung 70 mündet, die mit der PC-Rücklaufleitung 44 verbunden ist.

Die SC-Vorlaufleitung 66 und die SC-Rücklaufleitung 70 sind derart durch eine SC-Zirkulationsleitung 72 miteinander verbunden, dass Kühlwasser 12 aus der SC-Rücklaufleitung 70 im Kreislauf wieder in die SC-Vorlaufleitung 66 geführt werden kann. Diese Rückführung erfolgt, bevor das Kühlwasser 12 in die PC-Rücklaufleitung 44 zurückströmt. In der SC-Zirkulationsleitung 72 ist ein Zirkulationsventil 74 angeordnet, so dass der Anteil des zurückzuführenden Kühlwassers 12, d.h. der Anteil des Kühlwassers 12, der aus der SC-Zirkulationsleitung 72 in die SC-Vorlaufleitung 66 strömt, eingestellt werden kann. Das Zirkulationsventil 74 wird mittels eines Ventilantriebs 76 betrieben.

Der Sekundär-Versorgungskreis 18 umfasst eine frequenzgeregelte Pumpeinrichtung 78 mit einer Kühlwasser-Förderpumpe 80 für das Kühlwasser 12 und einem zugehörigen Frequenzumrichter 82. Beim vorliegenden Ausführungsbeispiel ist die Kühlwasser-Förderpumpe 80 zwischen der SC-Zirkulationsleitung 72 und dem Verbraucher-Wärmetauscher 64 in der SC-Vorlaufleitung 66 angeordnet. Anders ausgedrückt mündet die SC-Zirkulationsleitung 72 stromauf der Pumpeinrichtung 78 bzw. der Kühlwasser-Förderpumpe 80 in die SC-Vorlaufleitung 66.

Der Ventilantrieb 76 des Ventils 78 und der Frequenzumrichter 82 der Kühlwasser-Förderpumpe 80 werden mittels einer SC-Steuereinrichtung 84 angesteuert, welche hierzu via Steuerleitungen 86 und 88 mit dem Ventilantrieb 76 bzw. dem Frequenzumrichter 82 verbunden ist.

Die Vorlauf-Steuereinrichtung 42 und die SC-Steuereinrichtung 84 bzw. mehrere SC-Steuereinrichtungen 84, wenn mehrere Sekundär-Versorgungskreise 18 vorhanden sind, bilden gemeinsam ein Steuersystem der Industrieanlage 10.

Die SC-Steuereinrichtung 84 steuert das Ventil 78 und die Kühlwasser-Förderpumpe 80 abhängig von Messparametern, welche sie von einem Sensorsystem 90 erhält, welches zugehörige Sensorantworten an die SC-Steuereinrichtung 84 überträgt. Das Sensorsystem 90 umfasst mehrere Sensoren, welche ihre Sensordaten an die SC-Steuereinrichtung 84 übermitteln, was durch gestrichelte Verbindungslinien angedeutet ist, die nicht eigens mit einem Bezugszeichen versehen sind. Eine solche Kommunikation kann über entsprechende Datenleitungen oder drahtlos erfolgen.

Stromauf der Kühlwasser-Förderpumpe 80 misst ein Eingangs-Drucksensor 92 den Eingangsdruck des Kühlwassers 12 auf der Eingangsseite der Kühlwasser-Förderpumpe 80. Ein Ausgangs-Drucksensor 94 misst den Ausgangsdruck des Kühlwassers 12 auf der Ausgangsseite der Kühlwasser-Förderpumpe 80. Auf diese Weise ist die Möglichkeit für eine Differenzdruckmessung in die Pumpeinrichtung 78 integriert.

Das Sensorsystem 90 umfasst außerdem einen Vorlauf-Temperatursensor 96, welcher die Temperatur des Kühlwassers 12 in der SC-Vorlaufleitung 66 auf der Einlassseite des Verbrauchers 16, d.h. vorliegend auf der Einlassseite des Verbraucher-Wärmetauschers 64 erfasst. Ein Rücklauf-Temperatursensor 98 ermittelt die Temperatur des Kühlwassers 12 in der SC-Rücklaufleitung 70 an der Auslassseite des Verbrauchers 16, d.h. vorliegend an der Auslassseite des Verbraucher-Wärmetauschers 64.

Ein Verbraucher-Sensorsystem 100 gibt der Steuereinrichtung 66 zudem eine Rückmeldung über Betriebsparameter des Verbrauchers 16, welche die erzielte Wirkung der Einstellungen im Sekundär-Versorgungskreis 18 auf den Verbraucher widerspiegeln. Vorliegend ist das Verbraucher-Sensorsystem 100 anhand eines Temperatursensors 102 veranschaulicht.

Wenn der Verbraucher-Wärmetauscher 64 beispielsweise zu einer Umluftanlage gehört, kann der Temperatursensor 102 des Verbraucher-Sensorsystems 100 in dem Luftstrom der Umluftanlage angeordnet sein, der den Verbraucher-Wärmetauscher 64 verlassen hat.

Durch die frequenzgeregelte Pumpeinrichtung 78 ist ein besonders energieeffizienter Betrieb des Sekundär-Versorgungskreises 18 zur Wärmeübertragung am Verbraucher 16 möglich:
In einem ersten Betriebsmodus kann die Temperatur des Kühlwassers 12, welches aus der SC-Vorlaufleitung 66 in den Verbraucher-Wärmetauscher 64 eintritt, durch eine Beimischregelung eingestellt werden. Hierbei wird der Volumenstrom des Kühlwassers 12 durch den Verbraucher-Wärmetauscher 64 konstant gehalten und die Regelung erfolgt über eine Ansteuerung des Zirkulationsventils 74 in der SC-Zirkulationsleitung 72.

Wenn beispielsweise der Temperatursensor 102 erfasst, dass die zu temperierende Umluft zu kalt ist, dass also die Temperatur der Umluft unterhalb einer Soll-Temperatur ist, und wenn der Rücklauf-Temperatursensor 98 erfasst, dass die Temperatur des Kühlwassers 12 in der SC-Rücklaufleitung 70 höher ist als die Soll-Temperatur der Umluft, kann die Temperatur des Kühlwassers 12 in der SC-Vorlaufleitung 66 erhöht werden, indem das Zirkulationsventil 74 geöffnet oder weiter geöffnet wird, so dass Kühlwasser 12 aus der SC-Rücklaufleitung 70 in die SC-Vorlaufleitung 66 hinüberströmt und sich das dort befindliche Kühlwasser 12 insgesamt auf eine höhere Temperatur erwärmt, als ohne dieses Hinüberströmen von Kühlwasser 12.

Der Volumenstrom des Kühlwassers 12 in der SC-Vorlaufleitung 66 wird durch eine entsprechende Regelung der Förderpumpe 80 konstant gehalten.

Wenn die zu temperierende Umluft dagegen zu warm ist, kann das Zirkulationsventil 74 geschlossen werden, so dass dem Verbraucher-Wärmetauscher 64 unvermischtes kaltes Kühlwasser 12 aus der PC-Vorlaufleitung 20 zugeführt wird, wodurch die zu temperierende Umluft gekühlt wird.

In einem zweiten Betriebsmodus kann die Temperatur des Kühlwassers 12, welches aus der SC-Vorlaufleitung 66 in den Verbraucher-Wärmetauscher 64 eintritt, durch eine Volumenstromregelung eingestellt werden. Hierbei ist das Zirkulationsventil 74 geschlossen bzw. bleibt in einer Stellung geöffnet und die Zuführung des Kühlwassers 12 aus der PC-Vorlaufleitung 20 wird nur über die Drehzahl der Förderpumpe 80 geregelt. Wenn das Zirkulationsventil 74 geschlossen ist, handelt es sich bei dem Kühlwasser 12, das in den Verbraucher-Wärmetauscher 64 eingespeist wird, um kaltes, unvermischtes Kühlwasser 12, d.h. um aus dem Brunnenschacht 30 gefördertes Grundwasser 24, aus der PC-Vorlaufleitung 20.

In einem dritten Betriebsmodus erfolgt die Einstellung der Temperatur des Kühlwassers 12, welches aus der SC-Vorlaufleitung 66 in den Verbraucher-Wärmetauscher 64 eintritt, durch eine Kombinationsregelung, welche die oben erläuterte Beimischregelung und die oben erläuterte Volumenstromregelung kombiniert.

Wenn die Temperatur der zu temperierenden Umluft erhöht werden soll, kann hierbei ohne eine Änderung der Einstellung des Zirkulationsventils 74 nur die Drehzahl der Förderpumpe 80 zunächst bis zu einem unteren Schwellenwert reduziert werden, der zum Beispiel bei 50% der Maximaldrehzahl der Förderpumpe 80 liegt. Wenn dieser Schwellenwert erreicht ist, wird der Volumenstrom konstant gehalten und die weitere Temperaturregelung erfolgt durch eine entsprechende Ansteuerung des Zirkulationsventils 74.

Mit Hilfe der frequenzgeregelten Pumpeinrichtung 78 können auch Druckveränderungen im Primär-Versorgungskreis 14 schnell und zuverlässig kompensiert werden, die durch weitere Verbraucher 16 in weiteren Sekundär-Versorgungskreisen 18 auftreten können.

Die SC-Steuereinrichtung 84 ist außerdem derart eingerichtet, dass sie in der Lage ist, die für den Betrieb erforderliche Energie zu erfassen. Im Frequenzumrichter 82 ist die Pumpenkennlinie der Förderpumpe 80 hinterlegt. Durch eine entsprechende Strommessung in Verbindung mit der Drehzahl der Förderpumpe 80 und dem Ergebnis der Differenzdruckmessung durch die Drucksensoren 92 und 94 kann der Volumenstrom berechnet und als 4-20mA-Stromsignal ausgegeben werden, was wiederum im Zusammenspiel mit den Temperaturdaten der Temperatursensoren 96 und 98 in einen die benötigte Energie widerspiegelnden Wert umgerechnet werden kann. Abhängig von den erhaltenen Daten entscheidet die SC-Steuereinrichtung 84, welche Betriebsart mit Blick auf den Energieverbrauch und die geforderte Effektivität bei dem Temperiervorgang am Verbraucher 16 die günstigste ist. Auf weitere Energiezähler in der Anlage 10 kann verzichtet werden.

Durch die Flexibilität bei der Wahl des Regelprinzips, d.h. Beimischregelung, Volumenstromregelung oder Kombinationsregelung, kann der Sekundär-Versorgungskreis 18 energieoptimiert betrieben werden und immer auf den günstigsten Energieverbrauch eingestellt werden.

Insgesamt wird die Förderpumpe 80 in der Regel in allen Betriebsmodi derart betrieben, dass der Druck am Ausgangs-Drucksensor 94 höher ist als am Eingangs-Drucksensor 92, d.h. dass der Druck des Kühlwassers 12 in der SC-Rücklaufleitung 70 stets größer ist als in der SC-Vorlaufleitung 66 vor der Förderpumpe 80 und in dem Verbraucher-Wärmetauscher 64 bzw. in der SC-Wärmetauscherleitung 68.

Es muss zudem kein pauschaler Vordruck in der PC-Vorlaufleitung 20 des Primär-Versorgungskreises 14 vorgehalten werden; es sind keine Netzpumpen im Primär-Versorgungskreis 14 notwendig, wodurch neben der besseren Energiebilanz auch der Wartungs- und Instandhaltungsaufwand der Anlage sinkt.

Bei einer nicht eigens gezeigten Abwandlung kann der Verbraucher-Wärmetauscher 64 auch als Plattenwärmetauscher ausgebildet sein.

Die jeweilige SC-Steuereinrichtung 84 von den vorhandenen Sekundär-Versorgungskreisen 18 kommuniziert mit der Vorlaufsteuereinrichtung 42. Es kann beispielsweise zu dem Fall kommen, dass der Volumenstrom des Grundwassers 24 durch die PC-Vorlaufleitung 20 nicht ausreicht, um alle vorhandenen Sekundär-Versorgungskreise 18 ausreichend mit Kühlwasser 12 zu versorgen, so dass die erforderliche Kühlleistung am Verbraucher-Wärmetauscher 64 sichergestellt ist. In diesem Fall erhält die Vorlaufsteuereinrichtung 42 ein entsprechendes Signal, worauf die Drehzahl der Grundwasser-Förderpumpe 36 erhöht wird. Eine entsprechende Steuerung der Grundwasser-Förderpumpe 36 erfolgt abhängig von den Daten von den Drucksensoren 38, 40 der Grundwasser-Förderpumpe 36 und den Daten der Temperatursensoren 60, 62 an der Ausgleichseinrichtung 56.

In der Industrieanlage 10 kann es dazu kommen, dass die Temperatur des geförderten Grundwassers 24 und damit des in die PC-Vorlaufleitung 20 eingespeisten Kühlwassers 12 eine vorgegebene Höchsttemperatur übersteigt und das Kühlwasser 12 nicht ausreichend kalt ist, um die erforderliche Kühlleistung an dem oder an den Sekundär-Versorgungskreisen 18 zu leisten. Dies kann von der Fördertiefe des Grundwassers 24, von Umgebungsbedingungen und/oder von dem Wärmeaustausch an Verbrauchern 16, insbesondere wenn mehrere Sekundär-Versorgungskreise 18 vorhanden sind, abhängen.

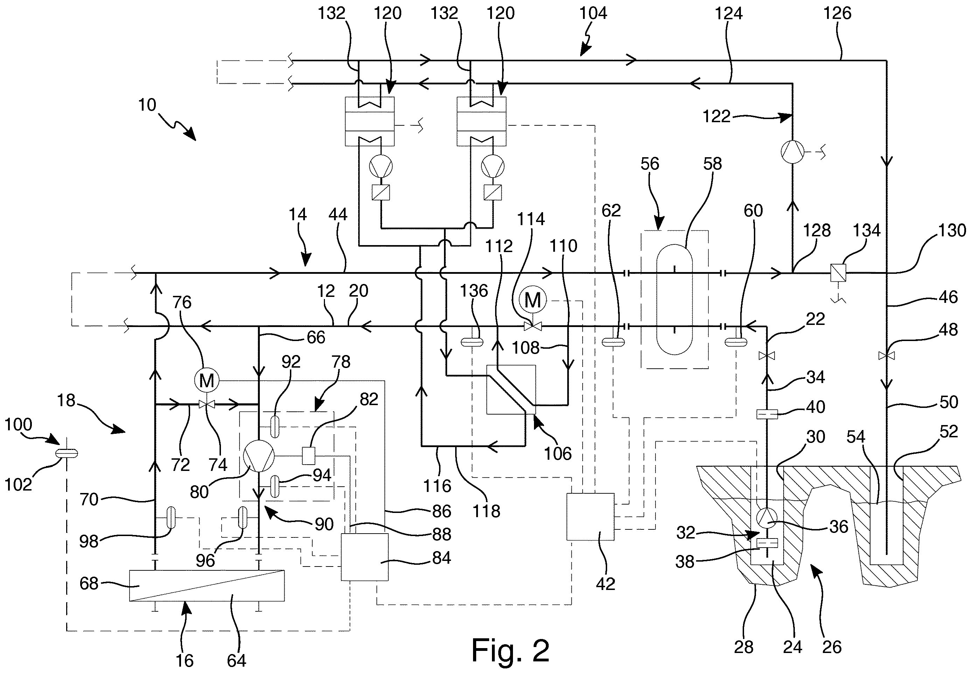

Das in Figur 2 gezeigte zweite Ausführungsbeispiel der Industrieanlage 10 trägt diesem Umstand Rechnung und umfasst hierzu ergänzend ein Nachkühlsystem 104, mittels welchem Kühlwasser 12 in der PC-Vorlaufleitung 20 gekühlt werden kann. Alle bereits im Zusammenhang mit Figur 1 beschriebenen Bauteile und Komponenten tragen dort dieselben Bezugszeichen.

Das Nachkühlsystem 104 umfasst einen Nachkühl-Wärmetauscher 106, durch den eine PC-Vorlauf-Bypassleitung 108 der PC-Vorlaufleitung 20 führt. Der Nachkühl-Wärmetauscher 106 kann beispielsweise ein Plattenwärmetauscher sein. Die PC-Vorlauf-Bypassleitung 108 erstreckt sich zwischen einer Abzweigung 110 und einer dazu stromab liegenden Mündungsstelle 112 der PC-Vorlaufleitung 20. Zwischen der Abzweigung 110 und der Mündungsstelle 112 der PC-Vorlauf-Bypassleitung 108 ist in der PC-Vorlaufleitung 20 ein Vorlauf-Bypassventil 114 angeordnet, welche von der Vorlaufsteuereinrichtung 42 angesteuert wird, so dass die PC-Vorlauf-Bypassleitung 108 geöffnet oder geschlossen werden kann. Das Vorlauf-Bypassventil 114 kann auch als Drosselventil ausgebildet sein, so dass der Zulauf-Querschnitt geändert werden kann.

Dem Nachkühl-Wärmetauscher 106 wird ein gesondertes Kühlmedium 116 in einer KühlKreisleitung 118 zugeführt, bei dem es sich um Wasser oder auch ein anderes Medium, beispielsweise Glykol oder ein Gemisch aus Wasser und Glykol, handeln kann.

Das gesonderte Kühlmedium 116 wird mittels einer oder mehrerer Kältemaschinen 120 gekühlt, wobei beim vorliegenden Ausführungsbeispiel zwei Kältemaschinen 120 veranschaulich sind. Beim vorliegenden Ausführungsbeispiel wird erwärmtes Kühlwasser 12, d.h. Rücklaufwasser 46, aus der PC-Rücklaufleitung 44 genutzt, um die Abwärme der Kältemaschinen 120 aufzunehmen und abzuführen.

Hierfür führt eine PC-Rücklauf-Bypassleitung 122 mit einem Zuführstrang 124 und einem Abführstrang 126 von einer Abzweigung 128 der PC-Rücklaufleitung 44 zu den Kältemaschinen 120 und wieder zurück zu einer Mündungsstelle 130 der PC-Rücklaufleitung 44. Jeweils eine Wärmetauscherschleife 132 verbindet den Zuführstrang 124 mit dem Abführstrang 126 und verläuft durch die Wärmeabgabeseite einer jeweiligen Kältemaschine 120. Zwischen der Abzweigung 128 und der Mündungsstelle 130 ist ein Rücklauf-Bypassventil 134 in der PC-Rücklaufleitung 44 angeordnet, welche durch die Vorlaufsteuereinrichtung 42 angesteuert wird; es ist hier keine vollständige Steuerleitung gezeigt.

Wenn das Rücklaufwasser 46 in der PC-Rücklaufleitung 44 eine Temperatur von 20°C bis 22°C hat und mit dieser Temperatur zu den Kältemaschinen 120 strömt, so hat das Rücklaufwasser 46 hiernach beispielsweise eine Temperatur von 24°C bis 30°C. Mit dieser Temperatur strömt das Rücklaufwasser 46 dann aus dem Abführstrang 126 der PC-Rücklauf-Bypassleitung 122 in die Ablaufleitung 50 und in den Schluckbrunnen 52.

Um die Temperatur des aus der PC-Vorlauf-Bypassleitung 108 kommenden Kühlwassers 12 zu überwachen, ist stromab der Mündungsstelle 112, d.h. auf der Auslassseite der PC-Rücklauf-Bypassleitung 122, ein Temperatursensor 136 angeordnet, der seine Signale an die Vorlaufsteuereinrichtung 42 übergibt.

Im Normalbetrieb ist sind sowohl das Vorlauf-Bypassventil 114 als auch das Rücklauf-Bypassventil 134 des Nachkühlsystem 104 geöffnet, so dass das Kühlwasser 12 weder in die PC-Vorlauf-Bypassleitung 108 noch in die PC-Rücklauf-Bypassleitung 122 einströmt.

Wenn nun die Vorlaufsteuereinrichtung 42 von einer oder von mehreren SC-Steuereinrichtungen 84 der vorhandenen Sekundär-Versorgungskreisen 18 die Rückmeldung erhält, dass die erforderliche Kühlleistung an dem oder den Verbraucher-Wärmetauschern 64 nicht mehr erbracht wird, kann die Vorlaufsteuereinrichtung 42 das Vorlauf-Bypassventil 114 und das Rücklauf-Bypassventil 134 öffnen und die Kältemaschinen 120 aktivieren. Das gesonderte Kühlmedium 116 in der Kühlkreisleitung 118 wird beispielsweise auf 6°C abgekühlt und durchströmt den Nachkühl-Wärmetauscher 106 mit dieser Temperatur. Hierdurch wird das Kühlwasser 12, das nun durch die PC-Vorlauf-Bypass-Leitung 108 strömt, entsprechend abgekühlt und erreicht hiernach den oder die Sekundär-Versorgungskreise 18. Ergänzend steuert die Vorlaufsteuereinrichtung 42 die Drehzahl der Grundwasser-Förderpumpe 36 abhängig von den Signalen des Temperatursensors 136.

Beim vorliegend gezeigten Ausführungsbeispiel erfolgt diese Nachkühlung, bevor das Kühlwasser 12 in Strömungsrichtung den ersten Sekundär-Versorgungskreis 18 erreicht. Hierfür sind die Abzweigung 110 und die Mündungsstelle 112 der PC-Vorlauf-Bypassleitung 108 und auch der Nachkühl-Wärmetauscher 106 zwischen der Ausgleichseinrichtung 56 und dem ersten Sekundär-Versorgungskreis 18 angeordnet.

Bei nicht eigens gezeigten Abwandlungen mit mehreren Sekundär-Versorgungskreisen 18 kann die Nachkühlung aber auch zwischen zwei benachbarten Sekundär-Versorgungskreisen 18 erfolgen, die von dem Kühlwasser 12 nacheinander durchströmt werden. Hierfür sind dann entsprechend die Abzweigung 110 und die Mündungsstelle 112 der PC-Vorlauf-Bypassleitung 108 und der Nachkühl-Wärmetauscher 106 zwischen den beiden SC-Vorlaufleitungen 66 der benachbarten Sekundär-Versorgungskreise 18 angeordnet. Es können auch in dieser Weise mehrere Nachkühl-Wärmetauscher 106 zwischen jeweils zwei benachbarten Sekundär-Versorgungskreisen 18 vorgesehen sein.

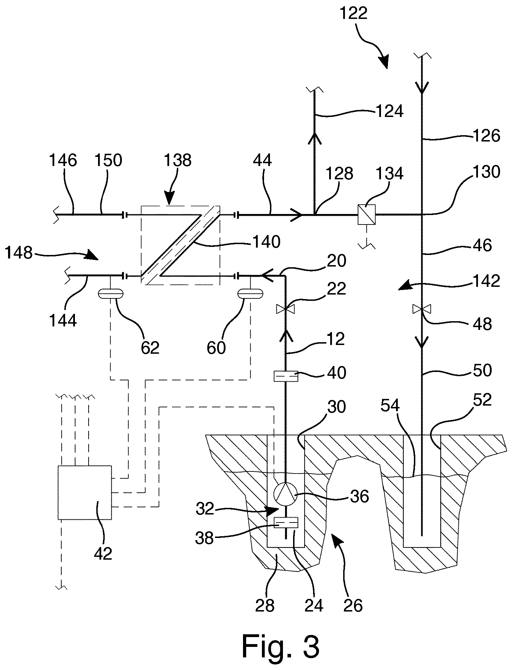

Bei der in Figur 3 gezeigten, nicht erfindungsgemäßen Industrieanlage ist anstelle der Ausgleichseinrichtung 56 bzw. der hydraulischen Weiche 58 ein Wärmetauscher 138, insbesondere ein Plattenwärmetauscher, vorgesehen sein. In diesem Fall sind die PC-Vorlaufleitung 20 und die PC-Rücklaufleitung 44 in diesem Wärmetauscher 138 durch eine Wärmetauscherleitung 140 zu einer Leitung miteinander verbunden, die einen ersten Sub-Primärkreis 142 des Primärkreises 14 definiert. In diesem Sub-Primärkreis 142 ist dann das Grundwasser 24 als Kühlmedium 12 geführt.

Die in den Figuren 1 und 2 jeweils gezeigte PC-Vorlaufleitung 20 und PC-Rücklaufleitung 44 sind durch eine Sub-Vorlaufleitung 144 und eine Sub-Rücklaufleitung 146 eines zweiten Sub-Primärkreises 148 ausgebildet, der einerseits mit den vorhandenen Sekundärkreisen 18 und andererseits über den Wärmetauscher 138 mit dem ersten Sub-Primärkreis 142 gekoppelt ist. In dem zweiten Sub-Primärkreis 148 ist ein gesondertes Kühlmedium geführt, das durch den Wärmetauscher 138 gekühlt wird. Dieses gesonderte Kühlmedium kann beispielsweise Glykol oder ein Gemisch aus Wasser und Glykol sein.

Das oben zu den Ausführungsbeispielen nach den Figuren 1 und 2 Gesagte gilt sinngemäß entsprechend, wobei die Sub-Vorlaufleitung 144 an die Stelle der PC-Vorlaufleitung 20 und die Sub-Rücklaufleitung 146 an die Stelle der PC-Rücklaufleitung 44 tritt.

## Patentansprüche

1. Industrieanlage mit
a) einem Primär-Versorgungskreis (14), in welchem Kühlwasser (12) geführt wird;
b) einem Verbraucher (16), dem Kühlwasser (12) aus dem Primär-Versorgungskreis (14) zur Verfügung gestellt wird und der zu diesem Zweck über einen Sekundär-Versorgungskreis (18) mit dem Primär-Versorgungskreis (14) verbunden ist;
wobei
c) eine Vorlaufleitung (66) des Sekundär-Versorgungskreises (18) mit einer Vorlaufleitung (20) des Primär-Versorgungskreises (14) und eine Rücklaufleitung (70) des Sekundär-Versorgungskreises (18) mit einer Rücklaufleitung (44) des Primär-Versorgungskreises (14) verbunden ist,
**dadurch gekennzeichnet, dass**
d) die Vorlaufleitung (20) des Primär-Versorgungskreises (14) mit einer Grundwasser-Förderleitung (34) einer Brunnenanlage (26) verbunden ist, die eine Grundwasser-Fördereinrichtung (32) umfasst und mittels welcher Grundwasser (24) aus einem Grundwasserleiter (28) förderbar ist und mittels welcher dieses Grundwasser (24) als das Kühlwasser (12) in die Vorlaufleitung (20) des Primär-Versorgungskreises (14) einspeisbar ist.

2. Industrieanlage nach Anspruch 1, **dadurch gekennzeichnet, dass** die Rücklaufleitung (44) des Primär-Versorgungskreises (14) mit einer Ablaufleitung (50) verbunden ist, die Kühlwasser (12) als Rücklaufwasser (46) an einen Schluckbrunnen (52) der Brunnenanlage (26) oder in anderer Weise an die Umwelt abgibt.

3. Industrieanlage nach Anspruch 1 oder 2, **dadurch gekennzeichnet, dass** der Primär-Versorgungskreis (14) mit einem Nachkühlsystem (104) verbunden ist, mittels welchem Kühlwasser (12) in der Vorlaufleitung (20) des Primär-Versorgungskreises (14) gekühlt werden kann.

4. Industrieanlage nach Anspruch 3, **dadurch gekennzeichnet, dass** das Nachkühlsystem (104) einen Nachkühl-Wärmetauscher (106) umfasst, durch den eine Vorlauf-Bypassleitung (108) der Vorlaufleitung (20) des Primär-Versorgungskreises (14) führt und dem ein gesonderte Kühlmedium (116), insbesondere Wasser, Glykol oder ein Gemisch aus Wasser und Glykol, zuführbar ist, wobei die Vorlauf-Bypassleitung (108) mittels eines Vorlauf-Bypassventils (114) geöffnet oder verschlossen werden kann.

5. Industrieanlage nach Anspruch 4, **dadurch gekennzeichnet, dass** das Nachkühlsystem (104) eine oder mehrere Kältemaschinen (120) umfasst, mittels welchen das gesonderte Kühlmedium (116) gekühlt wird.

6. Industrieanlage nach Anspruch 5, **dadurch gekennzeichnet, dass** eine Rücklauf-Bypassleitung (122) des Primär-Versorgungskreises (14) von dessen Rücklaufleitung (44) zu der Kältemaschine (120) und wieder zurück zu der Rücklaufleitung (44) führt, wobei die Wärmeabgabeseite der Kältemaschine (120) über eine Wärmetauscherschleife (132) mit der Rücklauf-Bypassleitung (122) verbunden ist.

7. Industrieanlage nach einem der Ansprüche 1 bis 6, bei welcher zum Fördern des Kühlwassers (12) durch den Sekundär-Versorgungskreis (18) eine frequenzgeregelte Pumpeinrichtung (78) mit einer Kühlwasser-Förderpumpe (80) und einem der Kühlwasser-Förderpumpe (80) zugeordneten Frequenzumrichter (82) vorgesehen ist.

8. Industrieanlage nach Anspruch 7 , **dadurch gekennzeichnet, dass** die Vorlaufleitung (66) und die Rücklaufleitung (70) des Sekundär-Versorgungskreises (18) durch eine Zirkulationsleitung (72) miteinander verbunden sind, derart, dass Kühlwasser (12) aus der Rücklaufleitung (70) des Sekundär-Versorgungskreises (18) im Kreislauf in die Vorlaufleitung (66) des Sekundär-Versorgungskreises (18) führbar ist, wobei die Zirkulationsleitung (72) stromauf der Kühlwasser-Förderpumpe (80) in die Vorlaufleitung (66) des Sekundär-Versorgungskreises (18) mündet und/oder ein Zirkulationsventil (74) vorhanden ist, mittels welchem der Anteil des Kühlwassers (12), welches durch die Zirkulationsleitung (72) in die Vorlaufleitung (66) des Sekundär-Versorgungskreises (18) strömt, einstellbar ist.

9. Industrieanlage nach einem der Ansprüche 1 bis 8, **dadurch gekennzeichnet, dass** die Grundwasser-Fördereinrichtung (32) und, sofern vorhanden, die frequenzgeregelte Pumpeinrichtung (78) und/oder das Zirkulationsventil (74) und oder das Vorlauf-Bypassventil (114) und/oder die Kältemaschine (120) mittels eines Steuersystems (42, 84) ansteuerbar sind.

10. Industrieanlage nach Anspruch 9 **dadurch gekennzeichnet, dass** das Steuersystem (42, 84) mit einem Sensorsystem (90) verbunden ist, mittels welchem
a) der Eingangsdruck des Grundwassers (24) auf der Einlassseite der Grundwasser-Fördereinrichtung (32) und/oder der Ausgangsdruck des Grundwassers (24) auf der Auslassseite der Grundwasser-Fördereinrichtung (32);
und/oder
b) der Eingangsdruck des Kühlwassers (12) auf der Einlassseite der Kühlwasser-Förderpumpe (80) und/oder der Ausgangsdruck des Kühlwassers (12) auf der Auslassseite der Kühlwasser-Förderpumpe (80);
und/oder
c) die Temperatur des Kühlwassers (12) in der Vorlaufleitung (66) des Sekundär-Versorgungskreises (18) auf der Einlassseite des Verbraucher-Wärmetauschers (64) und/oder die Temperatur des Kühlwassers (12) in der Rücklaufleitung (70) des Sekundär-Versorgungskreises (18) an der Auslassseite des Verbraucher-Wärmetauschers (46);
und/oder
d) die Temperatur des Kühlwassers (12) in der Vorlaufleitung (20) des Primär-Versorgungskreises (14) auf der Auslassseite der Rücklauf-Bypassleitung (122);
erfassbar ist und die zugehörigen Sensorantworten an das Steuersystem (42, 84) übertragbar sind.

11. Verfahren zum Betreiben einer Industrieanlage (10) mit einem Primär-Versorgungskreis (14) für Kühlwasser (12), welcher mit wenigstens einem Sekundär-Versorgungskreis (18) für das Kühlwasser (12), mit welchem das Kühlwasser (12) einem Verbraucher (16) zur Verfügung gestellt wird, wobei eine Vorlaufleitung (66) des Sekundär-Versorgungskreises (18) mit einer Vorlaufleitung (20) des Primär-Versorgungskreises (14) und eine Rücklaufleitung (70) des Sekundär-Versorgungskreises (18) mit einer Rücklaufleitung (44) des Primär-Versorgungskreises (14) verbunden ist,
**dadurch gekennzeichnet, dass**
als das Kühlwasser (12) natürlich vorkommendes Grundwasser (24) genutzt wird, das mit Hilfe einer Brunnenanlage (26) aus einem Grundwasserleiter (28) gewonnen wird.

12. Verfahren nach Anspruch 11, **dadurch gekennzeichnet, dass** das Kühlwasser (12) in der Vorlaufleitung (20) des Primär-Versorgungskreises (18) mit Hilfe eines Nachkühlsystems (104) gekühlt wird, wenn die Temperatur des Kühlwassers (12) eine vorgegebene Höchsttemperatur übersteigt.

13. Verfahren nach Anspruch 11 oder 12 **dadurch gekennzeichnet, dass** eine Industrieanlage (10) nach einem der Ansprüche 1 bis 10 betrieben wird.

## Claims

1. Industrial installation with
a) a primary supply circuit (14), in which cooling water (12) is conducted;
b) a consumer (16), to which cooling water (12) from the primary supply circuit (14) is made available, and which is connected via a secondary supply circuit (18) to the primary supply circuit (14) for this purpose;
c) an inflow line (66) of the secondary supply circuit (18) being connected to an inflow line (20) of the primary supply circuit (14), and a return line (70) of the secondary supply circuit (18) being connected to a return line (44) of the primary supply circuit (14),
**characterized in that**
d) the inflow line (20) of the primary supply circuit (14) is connected to a groundwater conveying line (34) of a well system (26) which comprises a groundwater conveying device (32) and by means of which groundwater (24) can be conveyed out of an aquifer (28) and by means of which this groundwater (24) can be fed as the cooling water (12) into the inflow line (20) of the primary supply circuit (14).

2. Industrial installation as claimed in claim 1, **characterized in that** the return line (44) of the primary supply circuit (14) is connected to an outflow line (50) which outputs cooling water (12) as return water (46) to a discharge well (52) of the well system (26) or outputs it to the environment in another way.

3. Industrial installation as claimed in claim 1 or 2, **characterized in that** the primary supply circuit (14) is connected to an aftercooling system (104), by means of which cooling water (12) can be cooled in the inflow line (20) of the primary supply circuit (14).

4. Industrial installation as claimed in claim 3, **characterized in that** the aftercooling system (104) comprises an aftercooling heat exchanger (106), through which an inflow bypass line (108) of the inflow line (20) of the primary supply circuit (14) leads and to which a separate cooling medium (116), in particular water, glycol or a mixture of water and glycol, can be fed, it being possible for the inflow bypass line (108) to be opened or closed by means of an inflow bypass valve (114).

5. Industrial installation as claimed in claim 4, **characterized in that** the aftercooling system (104) comprises one or more refrigerating machines (120), by means of which the separate cooling medium (116) is cooled.

6. Industrial installation as claimed in claim 5, **characterized in that** a return bypass line (122) of the primary supply circuit (14) leads from its return line (44) to the refrigerating machine (120) and back again to the return line (44), the heat output side of the refrigerating machine (120) being connected via a heat exchanger loop (132) to the return bypass line (122).

7. Industrial installation as claimed in one of claims 1 to 6, in the case of which a frequency-regulated pumping device (78) with a cooling water conveying pump (80) and a frequency converter (82) which is assigned to the cooling water conveying pump (80) is provided for conveying the cooling water (12) through the secondary supply circuit (18).

8. Industrial installation as claimed in claim 7, **characterized in that** the inflow line (66) and the return line (70) of the secondary supply circuit (18) are connected to one another by way of a circulation line (72) in such a way that cooling water (12) can be conducted out of the return line (70) of the secondary supply circuit (18) in a circulating manner into the inflow line (66) of the secondary supply circuit (18), the circulation line (72) opening upstream of the cooling water conveying pump (80) into the inflow line (66) of the secondary supply circuit (18), and/or there being a circulation valve (74), by means of which the proportion of cooling water (12) which flows through the circulation line (72) into the inflow line (66) of the secondary supply circuit (18) can be set.

9. Industrial installation as claimed in one of claims 1 to 8, **characterized in that** the groundwater conveying device (32) and, if present, the frequency-regulated pumping device (78) and/or the circulation valve (74) and/or the inflow bypass valve (114) and/or the refrigerating machine (120) can be actuated by means of a control system (42, 84).

10. Industrial installation as claimed in claim 9, **characterized in that** the control system (42, 84) is connected to a sensor system (90), by means of which
a) the inlet pressure of the groundwater (24) on the inlet side of the groundwater conveying device (32) and/or the outlet pressure of the groundwater (24) on the outlet side of the groundwater conveying device (32);
and/or
b) the inlet pressure of the cooling water (12) on the inlet side of the cooling water conveying pump (80) and/or the outlet pressure of the cooling water (12) on the outlet side of the cooling water conveying pump (80);
and/or
c) the temperature of the cooling water (12) in the inflow line (66) of the secondary supply circuit (18) on the inlet side of the consumer heat exchanger (64) and/or the temperature of the cooling water (12) in the return line (70) of the secondary supply circuit (18) on the outlet side of the consumer heat exchanger (46);
and/or
d) the temperature of the cooling water (12) in the inflow line (20) of the primary supply circuit (14) on the outlet side of the return bypass line (122);
can be detected, and the associated sensor responses can be transmitted to the control system (42, 84).

11. Method for operating an industrial installation (10) with a primary supply circuit (14) for cooling water (12), which primary supply circuit (14) is connected to at least one secondary supply circuit (18) for the cooling water (12), by means of which secondary supply circuit (18) the cooling water (12) is made available to a consumer (16), an inflow line (66) of the secondary supply circuit (18) being connected to an inflow line (20) of the primary supply circuit (14), and a return line (70) of the secondary supply circuit (18) being connected to a return line (44) of the primary supply circuit (14),
**characterized in that**
naturally occurring groundwater (24) is used as the cooling water (12), which groundwater (24) is obtained from an aquifer (28) with the aid of a well system (26).

12. The method as claimed in claim 11, **characterized in that** the cooling water (12) is cooled in the inflow line (20) of the primary supply circuit (18) with the aid of an aftercooling system (104) if the temperature of the cooling water (12) exceeds a predefined maximum temperature.

13. The method as claimed in claim 11 or 12, **characterized in that** an industrial installation (10) as claimed in one of claims 1 to 10 is operated.

## Revendications

1. Installation industrielle avec
a) un circuit d'alimentation primaire (14) dans lequel de l'eau de refroidissement (12) est acheminée ;
b) un consommateur (16) qui reçoit de l'eau de refroidissement (12) du circuit d'alimentation primaire (14) et qui est relié à cet effet au circuit d'alimentation primaire (14) par l'intermédiaire d'un circuit d'alimentation secondaire (18) ;
dans laquelle
c) une conduite d'alimentation (66) du circuit d'alimentation secondaire (18) est reliée à une conduite d'alimentation (20) du circuit d'alimentation primaire (14) et une conduite de retour (70) du circuit d'alimentation secondaire (18) est reliée à une conduite de retour (44) du circuit d'alimentation primaire (14),
**caractérisée en ce que**
d) la conduite d'alimentation (20) du circuit d'alimentation primaire (14) est reliée à une conduite d'alimentation en eau souterraine (34) d'un système de puits (26), qui comprend un dispositif d'alimentation en eau souterraine (32) et au moyen duquel l'eau souterraine (24) peut être extraite d'une conduite d'alimentation en eau souterraine (28) et au moyen de laquelle cette eau souterraine (24) peut être introduite dans la conduite d'alimentation (20) du circuit d'alimentation primaire (14) en tant qu'eau de refroidissement (12).

2. Installation industrielle selon la revendication 1, **caractérisée en ce que** la conduite de retour (44) du circuit d'alimentation primaire (14) est reliée à une conduite d'évacuation (50) qui délivre de l'eau de refroidissement (12) sous forme d'eau de retour (46) à un puits de déglutition (52) de l'installation de puits (26) ou à l'environnement d'une autre manière.

3. Installation industrielle selon la revendication 1 ou 2, **caractérisée en ce que** le circuit d'alimentation primaire (14) est relié à un système de post-refroidissement (104) au moyen duquel de l'eau de refroidissement (12) peut être refroidie dans la conduite d'alimentation (20) du circuit d'alimentation primaire (14).

4. Installation industrielle selon la revendication 3, **caractérisée en ce que** le système de post-refroidissement (104) comprend un échangeur thermique de post-refroidissement (106) à travers lequel passe une conduite de dérivation de départ (108) de la conduite de départ (20) du circuit d'alimentation primaire (14) et auquel un fluide de refroidissement séparé (116), en particulier de l'eau, du glycol ou un mélange d'eau et de glycol, peut être amené, la conduite de dérivation de départ (108) pouvant être ouverte ou fermée au moyen d'une soupape de dérivation de départ (114).

5. Installation industrielle selon la revendication 4, **caractérisée en ce que** le système de post-refroidissement (104) comprend un ou plusieurs refroidisseurs (120) au moyen desquels le fluide de refroidissement séparé (116) est refroidi.

6. Installation industrielle selon la revendication 5, **caractérisée en ce qu'**une conduite de dérivation de retour (122) du circuit d'alimentation primaire (14) conduit de sa conduite de retour (44) à la machine frigorifique (120) et de nouveau à la conduite de retour (44), le côté de dissipation de chaleur de la machine frigorifique (120) étant relié à la conduite de dérivation de retour (122) par une boucle d'échange de chaleur (132).

7. Installation industrielle selon l'une quelconque des revendications 1 à 6, dans laquelle, pour acheminer l'eau de refroidissement (12) à travers le circuit d'alimentation secondaire (18), il est prévu un dispositif de pompe à fréquence régulée (78) avec une pompe d'alimentation en eau de refroidissement (80) et un convertisseur de fréquence (82) associé à la pompe d'alimentation en eau de refroidissement (80).

8. Installation industrielle selon la revendication 7, **caractérisée en ce que** la conduite d'alimentation (66) et la conduite de retour (70) du circuit d'alimentation secondaire (18) sont reliées l'une à l'autre par une conduite de circulation (72), de sorte que l'eau de refroidissement (12) peut être amenée de la conduite de retour (70) du circuit d'alimentation secondaire (18) dans le circuit dans la conduite d'alimentation (66) du circuit d'alimentation secondaire (18), la conduite de circulation (72) débouchant dans la conduite d'alimentation (66) du circuit d'alimentation secondaire (18) en amont de la pompe d'alimentation en eau de refroidissement (80) et/ou une soupape de circulation (74) est présente, au moyen de laquelle la proportion d'eau de refroidissement (12) qui s'écoule à travers la conduite de circulation (72) dans la conduite d'alimentation (66) du circuit d'alimentation secondaire (18) est réglable.

9. Installation industrielle selon l'une des revendications 1 à 8, **caractérisée en ce que** le dispositif de refoulement des eaux souterraines (32) et, le cas échéant, le dispositif de pompage régulé en fréquence (78) et/ou la soupape de circulation (74) et/ou la soupape de dérivation d'alimentation (114) et/ou la machine frigorifique (120) peuvent être commandés au moyen d'un système de commande (42, 84).

10. Installation industrielle selon la revendication 9, **caractérisée en ce que** le système de commande (42, 84) est relié à un système de capteurs (90) au moyen duquel
a) la pression d'entrée des eaux souterraines (24) du côté entrée du convoyeur d'eaux souterraines (32) et/ou la pression de sortie des eaux souterraines (24) du côté sortie du convoyeur d'eaux souterraines (32) ;
et/ou
b) la pression d'entrée de l'eau de refroidissement (12) du côté entrée de la pompe d'alimentation en eau de refroidissement (80) et/ou la pression de sortie de l'eau de refroidissement (12) du côté sortie de la pompe d'alimentation en eau de refroidissement (80) ;
et/ou
c) la température de l'eau de refroidissement (12) dans la conduite d'alimentation (66) du circuit d'alimentation secondaire (18) du côté entrée de l'échangeur de chaleur consommateur (64) et/ou la température de l'eau de refroidissement (12) dans la conduite de retour (70) du circuit d'alimentation secondaire (18) du côté sortie de l'échangeur de chaleur consommateur (46) ;
et/ou
d) la température de l'eau de refroidissement (12) dans la conduite d'alimentation (20) du circuit d'alimentation primaire (14) du côté de la sortie de la conduite de dérivation de retour (122) ;
peut être détecté et les réponses des capteurs correspondantes peuvent être transférées au système de commande (42, 84).

11. Procédé pour faire fonctionner une installation industrielle (10) avec un circuit d'alimentation primaire (14) pour l'eau de refroidissement (12), qui est relié à au moins un circuit d'alimentation secondaire (18) pour l'eau de refroidissement (12), avec lequel l'eau de refroidissement (12) est mise à disposition d'un consommateur (16), une conduite d'alimentation (66) du circuit d'alimentation secondaire (18) étant reliée à une conduite d'alimentation (20) du circuit d'alimentation primaire (14) et une conduite de retour (70) du circuit d'alimentation secondaire (18) étant reliée à une conduite de retour (44) du circuit d'alimentation primaire (14),
**caractérisé en ce que**
l'eau souterraine naturelle (24) est utilisée comme eau de refroidissement (12), qui est extraite d'un aquifère (28) à l'aide d'un système de puits (26).

12. Procédé selon la revendication 11, **caractérisé en ce que** l'eau de refroidissement (12) dans la conduite d'alimentation (20) du circuit d'alimentation primaire (18) est refroidie à l'aide d'un système de post-refroidissement (104) lorsque la température de l'eau de refroidissement (12) dépasse une température maximale prédéterminée.

13. Procédé selon la revendication 11 ou 12, **caractérisé en ce qu'**une installation industrielle (10) selon l'une quelconque des revendications 1 à 10 est exploitée.
